# EUROPÄISCHE PATENTSCHRIFT

(11) **EP 1 327 274 B1**
(45) Veröffentlichungstag und Bekanntmachung des Hinweises auf die Patenterteilung: **15.04.2009**
(21) Anmeldenummer: 01974038.0
(22) Anmeldetag: 14.09.2001
(51) Int. Cl.: H01M 8/02, H01M 8/24

(54) **BRENNSTOFFZELLENMODUL**
FUEL CELL MODULE
MODULE DE PILE A COMBUSTIBLE

(30) Priorität: 26.09.2000 DE 10047587
(43) Veröffentlichungstag der Anmeldung: 16.07.2003
(73) Patentinhaber: SIEMENS AKTIENGESELLSCHAFT, 80333 München (DE)
(72) Erfinder: BETTE, Willi, 91056 Erlangen (DE); LERSCH, Josef, 91336 Heroldsbach (DE); MATTEJAT, Arno, 91088 Bubenreuth (DE); STRASSER, Karl, 91058 Erlangen (DE)
(86) Internationale Anmeldenummer: PCT/DE2001/003540
(87) Internationale Veröffentlichungsnummer: WO 2002/027841

(56) Entgegenhaltungen:
- EP-A- 0 279 072
- US-A- 5 804 328

## Beschreibung

Die Erfindung betrifft ein Brennstoffzellenmodul mit einer Anzahl von hintereinandergeschalteten, zu einem Brennstoffzellenstapel zusammengefaßten Brennstoffzellen.

Brennstoffzellen können zur umweltfreundlichen Erzeugung von Elektrizität dienen. In einer Brennstoffzelle läuft ein Prozeß ab, der im wesentlichen eine Umkehrung der Elektrolyse darstellt. In einer Brennstoffzelle wird dafür ein Wasserstoff aufweisender Brennstoff einer Anode und ein Sauerstoff aufweisender Hilfsstoff einer Kathode zugeleitet. Anode und Kathode sind dabei elektrisch über eine Elektrolytschicht voneinander getrennt, wobei die Elektrolytschicht zwar einen Ionenaustausch zwischen dem Brennstoff und dem Sauerstoff zuläßt, ansonsten aber eine gasdichte Trennung von Brennstoff und Hilfsstoff sicherstellt. Infolge des Ionenaustauschs kann im Brennstoff enthaltener Wasserstoff mit dem Sauerstoff zu Wasser reagieren, wobei sich an der brennstoffseitigen Elektrode oder Anode Elektronen anreichern und an der hilfsstoffseitigen Elektrode oder Kathode Elektronen aufgenommen werden. Somit baut sich beim Betrieb der Brennstoffzelle eine nutzbare Potentialdifferenz oder Spannung zwischen Anode und Kathode auf, wobei als Abfallprodukt aus dem Elektrizitätserzeugungsprozeß lediglich Wasser anfällt. Die Elektrolytschicht, die bei einer Hochtemperatur-Brennstoffzelle als keramischer Festelektrolyt oder bei einer Niedertemperatur-Brennstoffzelle als Polymer-Membran ausgebildet sein kann, hat somit die Funktion, die Reaktanten voneinander zu trennen, die Ladung in Form von Ionen zu überführen und einen E-lektronenkurzschluß zu verhindern.

Aufgrund der elektrochemischen Potentiale der üblicherweise eingesetzten Stoffe kann in einer derartigen Brennstoffzelle unter normalen Betriebsbedingungen eine Elektrodenspannung von etwa 0,6 bis 1,0 V aufgebaut und während des Betriebs aufrechterhalten werden. Für technische Anwendungen, in denen abhängig vom Einsatzzweck oder der geplanten Belastung eine wesentlich höhere Gesamtspannung gefordert sein kann, sind daher üblicherweise eine Mehrzahl von Brennstoffzellen in der Art eines Brennstoffzellenstapels derart elektrisch in Reihe geschaltet, daß die Summe der von den Brennstoffzellen jeweils gelieferten Elektrodenspannungen der geforderten Gesamtspannung entspricht oder diese übersteigt. Je nach geforderter Gesamtspannung kann die Anzahl der Brennstoffzellen in einem derartigen Brennstoffzellenstapel beispielsweise 50 oder mehr betragen.

Die EP 0 279 072 A1 offenbart einen Brennstoffzellenstapel, bei dem die Leitungen, die mit der Polplatte des Stapels verbunden sind, nicht abgeschirmt werden.

Zur Nutzbarmachung der beim Betrieb der zu einem derartigen Brennstoffzellenstapel zusammengeschalteten Brennstoffzellen erzeugten Potentialdifferenz ist die Beschaltung des Brennstoffzellenstapels mit einer Last vorgesehen. Zum elektrischen Anschluß der Last an den Brennstoffzellenstapel ist dabei an den beiden äußersten der in Serie geschalteten Brennstoffzellen jeweils eine sogenannte Polplatte angeordnet, an die elektrische Zu- oder Ableitungen anschließbar sind.

Aufgrund der besonderen Betriebseigenschaften derartiger Brennstoffzellen und insbesondere im Hinblick auf die Erzeugung von lediglich Wasser als einziges wesentliches Abfallprodukt eignen sich Brennstoffzellen auch besonders zum Einsatz zur Energieversorgung in in sich abgeschlossenen mobilen Systemen wie beispielsweise Unterwasserfahrzeugen. Dabei ist insbesondere von Vorteil, daß in der Art einer vergleichsweise hohen Leistungsdichte in einer Brennstoffzellenanordnung mit nur beschränkten räumlichen Abmessungen ein vergleichsweise hoher Ausgangsstrom auf einem üblichen Spannungsniveau erzielbar ist. Zudem ist gerade bei der Verwendung in Unterwasserfahrzeugen der Brennstoff, also der den Wasserstoff umfassende Stoff, in vergleichsweise kompakter Form bereitstellbar. Als Hilfsstoff oder Oxidationsmittel kann dabei reiner Sauerstoff zum Einsatz kommen. Der Wasserstoff kann dabei insbesondere in Hydridtanks mitgeführt sein.

Gerade beim Einsatz von Brennstoffzellen in einem Unterwasserfahrzeug kann es wünschenswert sein, die nach außen abgegebene Signatur, also die von außen ermittelbare Anzeichen auf den Betrieb des Unterwasserfahrzeugs, besonders gering zu halten. Zu dieser Signatur können auch Magnetfelder zählen, die beim Betrieb von Brennstoffzellen durch die zu- und abfließenden Ströme erzeugt werden.

Der Erfindung liegt daher die Aufgabe zugrunde, ein Brennstoffzellenmodul mit einer Anzahl von hintereinandergeschalteten, zu einem Brennstoffzellenstapel zusammengefaßten Brennstoffzellen anzugeben, bei dem das in einem Außenbereich nachweisbare, bei seinem Betrieb erzeugte Magnetfeld oder Streufeld besonders gering gehalten ist.

Diese Aufgabe wird erfindungsgemäß gelöst, indem eine Anzahl von mit einer ersten Polplatte des Brennstoffzellenstapels verbundenen Abschirmleitungen vorgesehen sind, die am Außenbereich des Brennstoffzellenstapels entlang seiner Stapelrichtung bis hin zu einem Kontaktbereich bei einer zweiten Polplatte des Brennstoffzellenstapels geführt sind.

Die Erfindung geht dabei von der Überlegung aus, daß das im Außenbereich des Brennstoffzellenmoduls bei dessen Betrieb nachweisbare Magnetfeld besonders gering gehalten sein kann, indem die Betriebsströme in besonders weitgehendem Umfang auf geeignete Weise magnetisch kompensiert sind. Eine magnetische Kompensation kann dabei erfolgen, indem in der Art einer koaxialen Anordnung derjenige Raumbereich, in dem ein nennenswerter Betriebsstrom auftritt, in geeigneter Weise von Stromrückführungen umgeben ist. Die Stromrückführungen sollten dabei derart ausgelegt sein, daß ein dort in Gegenrichtung zum Betriebsstrom fließender Kompensationsstrom das vom Betriebsstrom erzeugte Magnetfeld im Außenbereich hinreichend kompensiert. Gerade bei einem Brennstoffzellenstapel aus einer Anzahl von hintereinandergeschalteten Brennstoffzellen tritt beim Betrieb infolge der Aktivität der Brennstoffzellen ein signifikanter Strom in den Brennstoffzellen selber auf. Dieser Betriebsstrom sollte durch geeignete Führung von Gegenströmen magnetisch hinreichend abgeschirmt sein. Dazu sind die Abschirmleitungen am Außenbereich des Brennstoffzellenstapels entlang geführt.

Vorteilhafte Ausgestaltungen der Erfindung sind Gegenstand der Unteransprüche.

Eine besonders gleichmäßige Abschirmwirkung im Außenbereich des Brennstoffzellenmoduls ist erreichbar, indem in vorteilhafter Ausgestaltung die Abschirmleitungen symmetrisch um die in Stapelrichtung ausgedehnte Zentralachse des Brennstoffzellenstapels herum angeordnet sind. Eine derartige Ausgestaltung ist zur Abschirmung des Magnetfelds besonders zuverlässig bei annähernd quadratischem Querschnitt des Brennstoffzellenstapels in Bezug auf seine Zentralachse.

In alternativer oder zusätzlicher vorteilhafter Ausgestaltung sind die Abschirmleitungen am Umfang des in Stapelrichtung ermittelten Querschnitts des Brennstoffzellenstapels annähernd gleichmäßig beabstandet angeordnet. Eine derartige Ausgestaltung ist insbesondere auch für eine zuverlässige Abschirmung des Magnetfelds bei nicht quadratischem, beispielsweise rechteckigem, Querschnitt des Brennstoffzellenstapels geeignet. Dabei könnte beispielsweise vorgesehen sein, bei einem Längen-Breiten-Verhältnis von etwa 2 zu 1 des Querschnitts des Brennstoffzellenstapels an seinen Längsseiten jeweils zwei und an seinen Breitseiten jeweils eine Abschirmleitung anzuordnen, wobei jede Abschirmleitung zu den hier jeweils benachbarten Abschirmleitungen annähernd gleichmäßig beabstandet ist.

Um auf besonders einfache Weise den Anschluß der Abschirmleitungen an eine weiterführende Stromleitung zu ermöglichen, sind die Abschirmleitungen im Kontaktbereich vorteilhafterweise zu einem ersten Anschlußkontakt, auch Sternpunkt oder Stromknoten genannt, zusammengeführt. Von diesem Anschlußkontakt kann dann über beispielsweise einen einzigen weiterführenden Leiter der Kontakt zu einem Anschlußpunkt oder direkt zu einer Last hergestellt werden. Durch den Anschlußkontakt wird der von den Abschirmleitungen geführte Strom in einem Punkt zusammengeführt und von dort aus weitergeleitet. Wird der Kontakt zu einem Anschlußpunkt oder zur Last beispielsweise durch mehrere Leitungen hergestellt, so bewirkt der Anschlußkontakt - auch bei einer Ungleichverteilung der Ströme auf den Abschirmleitungen - eine Gleichverteilung der Ströme in weiterführenden Leitungen. Auf diese Weise wird erreicht, daß das Streufeld des Brennstoffzellenmoduls unabhängig von äußeren Einflüssen ist.

Um auch bei dieser Ausgestaltung das magnetische Streufeld besonders gering zu halten, ist in zusätzlicher vorteilhafter Weiterbildung an der zweiten Polplatte des Brennstoffzellenstapels eine der Anzahl der Abschirmleitungen entsprechende Anzahl von Anschlußleitungen angeordnet, die zur Bildung eines zweiten Anschlußkontakts zusammengeführt sind, wobei im Kontaktbereich jede Anschlußleitung in unmittelbarer Nähe von jeweils einer Abschirmleitung geführt ist. Bei dieser Anordnung ist auf besonders einfache Weise erreicht, daß jede stromführende Leitung unmittelbar einer weiteren Leitung benachbart ist, die annähernd die gleiche Stromstärke in Gegenrichtung führt. Die durch Strom und Rückstrom umrandete Fläche, die im wesentlichen als ein Maß für das im Außenbereich resultierende magnetische Streufeld herangezogen werden kann, ist bei dieser Anordnung besonders klein gehalten.

Um derartig ausgebildete, streufeldarme brennstoffzellenmodule auch in geeigneter, streufeldarmer Weise elektrisch mit einer Last zu verbinden, ist in weiterer vorteilhafter Ausgestaltung die erste Polplatte mit einer Stromleitung und die zweite Polplatte mit einem die Stromleitung in der Art einer koaxialen Anordnung umgebenden Stromleitungssystem verbunden. Diese Verbindungen können dabei insbesondere unter Zwischenschaltung des genannten ersten bzw. zweiten Anschlußkontakts hergestellt sein.

Die mit der Erfindung erzielten Vorteile bestehen insbesondere darin, daß durch die Rückführung des den Brennstoffzellenstapel während dessen Betrieb durchströmenden Betriebsstroms am Außenbereich des Brennstoffzellenstapels entlang bis hin zum Kontaktbereich bei der entsprechenden Polplatte ein im Außenbereich des Brennstoffzellenmoduls detektierbares magnetisches Streufeld besonders gering gehalten ist. Bei dieser Anordnung ist nämlich der im Brennstoffzellenstapel fließende Betriebsstrom im Außenbereich des Brennstoffzellenstapels durch in Gegenrichtung fließende, den Betriebsstrom in Summe in der Größe entsprechende Rückströme umgeben. Damit ist auch für das eigentliche Brennstoffzellenmodul in der Art einer koaxialen Anordnung eine zuverlässige Abschirmung des in den Brennstoffzellen selbst fließenden Betriebsstroms gewährleistet.

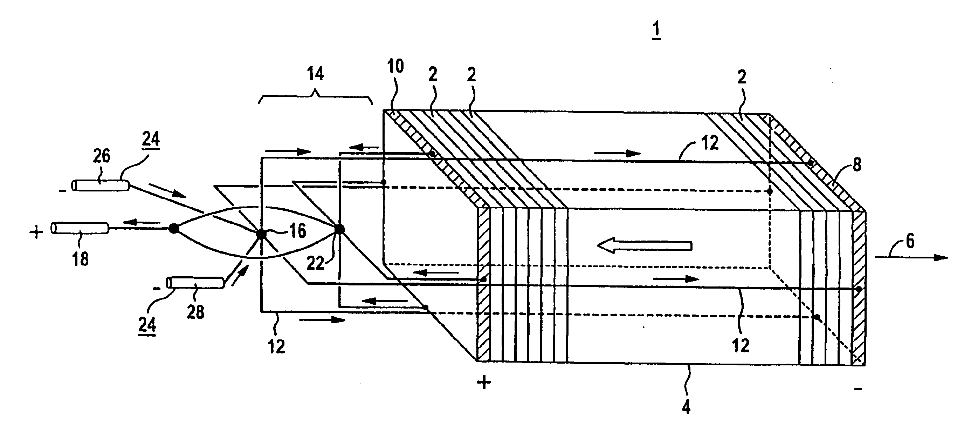

Ein Ausführungsbeispiel der Erfindung wird anhand einer Zeichnung näher erläutert. Darin zeigt die Figur ein Brennstoffzellenmodul.

Das Brennstoffzellenmodul 1 gemäß der Figur umfaßt eine Anzahl von Brennstoffzellen 2. Die Brennstoffzellen 2 sind elektrisch hintereinandergeschaltet und räumlich zu einem Brennstoffzellenstapel 4 zusammengefaßt. Jede Brennstoffzelle 2 umfaßt dabei zwei flächig ausgebildete Elektroden, die über einen Elektrolyt räumlich und elektrisch voneinander getrennt sind. Jede Brennstoffzelle 2 ist mit ihren Elektroden jeweils unmittelbar mit den ihr zugewandten Elektroden der ihr benachbarten Brennstoffzellen 2 verbunden. Die in der durch den Pfeil 6 angedeuteten Stapelrichtung des Brennstoffzellenstapels 4 gesehen erste und letzte Brennstoffzelle 2 ist mit ihrer am jeweiligen Rand des Brennstoffzellenstapels 4 angeordneten Elektrode hingegen mit einer Minuspolplatte oder ersten Polplatte 8 bzw. mit einer Pluspolplatte oder zweiten Polplatte 10 verbunden.

Die erste Polplatte 8 und die zweite Polplatte 10 dienen dabei zur Zu- bzw. Abfuhr eines Betriebsstroms zum Brennstoffzellenstapel 4 während dessen Betriebs. Beim Betrieb des Brennstoffzellenstapels 4 ergibt sich nämlich infolge der Rekombination des Wasserstoffs und des Sauerstoffs in den den Brennstoffzellen 2 zugeführten Materialien eine Umverteilung von Elektronen, die einerseits zur oben beschriebenen nutzbaren Potentialdifferenz führt und andererseits in kontinuierlichem Zustand einem Betriebsstrom durch den Brennstoffzellenstapel 4 entspricht. Dieser Betriebsstrom erzeugt im Außenbereich des Brennstoffzellenstapels 4 ein magnetisches Streufeld. Das Brennstoffzellenmodul 1 ist jedoch derart ausgelegt, daß dieses magnetische Streufeld besonders klein gehalten ist.

Dazu ist die erste Polplatte 8 des Brennstoffzellenstapels 4 mit einer Anzahl von Abschirmleitungen 12 verbunden. Die Abschirmleitungen 12 sind am Außenbereich des Brennstoffzellenstapels 4 entlang seiner durch den Pfeil 6 angedeuteten Stapelrichtung angeordnet und zur Rückführung des die Brennstoffzellen 2 im Inneren des Brennstoffzellenstapels 4 durchströmenden Betriebsstroms in den Bereich der zweiten Polplatte 10 bestimmt. Somit ergibt sich im wesentlichen eine koaxiale Anordnung eines durch den Brennstoffzellenstapel 4 an sich gegebenen ersten Leiters mit einer Anzahl von diesen umgebenden zweiten Leitern. Aufgrund der gegenläufigen Stromrichtung im ersten Leiter und in den zweiten Leitern kompensiert sich das durch die Ströme im Außenbereich des Brennstoffzellenstapels 4 erzeugte Magnetfeld annähernd, zumal der im ersten Leiter oder Brennstoffzellenstapel 4 geführte Strom und der in den zweiten Leitern oder Abschirmleitungen 12 insgesamt geführte Rückstrom vom Betrag her gleich groß sind. Die Abschirmung des magnetischen Streufelds im Außenbereich des Brennstoffzellenstapels 4 ist dabei im weit entfernten Raumbereich besonders umfassend; im Nahbereich direkt um den Brennstoffzellenstapel 4 herum können sich hingegen aufgrund von Geometrieeffekten - insbesondere, da die Rückführung des Stromes nicht in einem den Brennstoffzellenstapel 4 vollständig umschließenden Mantel erfolgt - noch Streufelder ergeben.

Die Abschirmleitungen 12 sind am Außenbereich des Brennstoffzellenstapels 4 bis hin zu einem Kontaktbereich 14 bei der zweiten Polplatte 10 des Brennstoffzellenstapels 4 geführt. Im Kontaktbereich 14 sind die Abschirmleitungen 12 zu einem ersten Anschlußkontakt 16 zusammengeführt, der mit einer Stromleitung 18 verbunden ist. Die Stromleitung 18 ist ihrerseits in nicht näher dargestellter Weise an eine vom Brennstoffzellenmodul 1 zu bespeisende Last angeschlossen.

Das Brennstoffzellenmodul 1 ist ferner auch dafür ausgelegt, das möglicherweise von den Abschirmleitungen 12 im Kontaktbereich 14 erzeugte magnetische Streufeld besonders gering zu halten. Dazu gehen von der zweiten Polplatte 10 eine der Anzahl der Abschirmleitungen 12 entsprechende Anzahl von Anschlußleitungen 20 aus, die zur Bildung eines zweiten Anschlußkontakts 22 zusammengeführt sind. Die Anschlußleitungen sind dabei räumlich derart geführt, daß im Kontaktbereich 14 jeweils eine Anschlußleitung 20 in unmittelbarer Nähe von jeweils einer Abschirmleitung 12 zu liegen kommt. Durch diese Anordnung wird das durch den in jeweils einer Abschirmleitung 12 fließenden Strom erzeugte magnetische Streufeld annähernd durch das durch den in der dieser Abschirmleitung 12 jeweils zugeordneten Anschlußleitung 20 fließenden Strom in Gegenrichtung erzeugte Magnetfeld annähernd kompensiert oder ausgelöscht. Mit anderen Worten: das durch ein jeweils durch eine Abschirmleitung 12 und eine zugeordnete Anschlußleitung 20 definierte Leitungspaar erzeugte gesamte magnetische Streufeld ist besonders gering gehalten, zumal die durch das Leitungspaar, also die jeweilige Abschirmleitung 12 und die jeweilige Anschlußleitung 20, umschlossene Fläche besonders gering gehalten ist.

Über die Anschlußleitungen 20 und den von diesen gebildeten zweiten Anschlußkontakt 22 ist die zweite Polplatte 10 mit einem die Stromleitung 18 in der Art einer koaxialen Anordnung umgebenden Stromleitungssystem 24 verbunden. Im Ausführungsbeispiel gemäß der Figur ist das Stromleitungssystem 24 dabei durch einen ersten Leiter 26 und durch einen zweiten Leiter 28 gegeben, die die Stromleitung 18 seitig umschließen. Alternativ kann aber auch zur Bildung des Stromleitungssystems 24 eine größere Anzahl von Leitern oder eine die Stromleitung vollständig umschließende, beispielsweise zylindrisch ausgebildete Hülle gegeben sein.

Der Brennstoffzellenstapel 4 und mit diesem die ihn bildenden Brennstoffzellen 2 weist im Ausführungsbeispiel einen annähernd quadratischen Querschnitt auf. Um an diesen angepaßt eine besonders günstige Abschirmwirkung zu erzielen, sind die Abschirmleitungen 12 symetrisch um eine in der durch den Pfeil 6 angedeuteten Stapelrichtung ausgedehnte Zentralachse des Brennstoffzellenstapels 4 herum angeordnet. Dabei ist insbesondere an jeder Außenseite des quadratischen Querschnitts jeweils eine Abschirmleitung 12 mittig angeordnet. Dadurch ergibt sich auch eine annähernd gleichmäßige Beabstandung der Abschirmleitungen 2 am Umfang des in Stapelrichtung ermittelten Querschnitts des Brennstoffzellenstapels 4. Bei einer von einer quadratischen Form abweichenden Querschnittsform des Brennstoffzellenstapels 4 kann jedoch auch eine andere, auf die jeweils vorliegende Querschnittsform angepaßte Führung der Abschirmleitungen 12 vorgesehen sein. Beispielsweise könnte bei rechteckigem Querschnitt des Brennstoffzellenstapels 4 eine Anzahl von Abschirmleitungen 12 so am Umfang des Querschnitts verteilt sein, daß das Verhältnis der Anzahl der an der Längsseite des rechteckigen Querschnitts geführten Abschirmleitungen 12 zur Anzahl der an der Schmalseite des rechteckigen Querschnitts geführten Abschirmleitungen 12 annähernd gleich dem Längenverhältnis der Längsseite zur Schmalseite ist.

## Patentansprüche

1. Brennstoffzellenmodul (1) mit einer Anzahl von hintereinandergeschalteten, zu einem Brennstoffzellenstapel (4) zusammengefaßten Brennstoffzellen (2), bei dem eine Anzahl von mit einer ersten Polplatte (8) des Brennstoffzellenstapels (4) verbundenen Abschirmleitungen (12) am Außenbereich des Brennstoffzellenstapels (4) entlang seiner Stapelrichtung bis hin zu einem Kontaktbereich bei einer zweiten Polplatte (10) des Brennstoffzellenstapels (4) geführt ist.

2. Brennstoffzellenmodul (1) nach Anspruch 1, bei dem die Abschirmleitungen (12) symmetrisch um eine in Stapelrichtung ausgedehnte Zentralachse des Brennstoffzellenstapels (4) herum angeordnet sind.

3. Brennstoffzellenmodul (1) nach Anspruch 1, bei dem die Abschirmleitungen (12) am Umfang seines in Stapelrichtung ermittelten Querschnitts annähernd gleichmäßig beabstandet angeordnet sind.

4. Brennstoffzellenmodul (1) nach einem der Ansprüche 1 bis 3, dessen Abschirmleitungen (12) im Kontaktbereich (14) zu einem ersten Anschlußkontakt (16) zusammengeführt sind.

5. Brennstoffzellenmodul (1) nach Anspruch 4, von dessen zweiter Polplatte (10) eine der Anzahl der Abschirmleitungen (12) entsprechende Anzahl von Anschlußleitungen (20) ausgehen, die zur Bildung eines zweiten Anschlußkontakts (22) zusammengeführt sind, wobei im Kontaktbereich (14) jede Anschlußleitung (20) in unmittelbarer Nähe von jeweils einer Abschirmleitung (12) geführt ist.

6. Brennstoffzellenmodul (1) nach einem der Ansprüche 1 bis 5, bei dem die erste Polplatte (8) mit einer Stromleitung (18) und die zweite Polplatte (10) mit einem die Stromleitung (18) in der Art einer koaxialen Anordnung umgebenden Stromleitungssystem (24) verbunden ist.

7. Brennstoffzellenmodul (1) nach einem der Ansprüche 1 bis 5, bei dem die erste Polplatte (8) und die zweite Polplatte (10) mit mindestens je zwei Stromleitungen (18) verbunden sind, wobei die Stromleitungen (18) von der ersten Polplatte (8) symmetrisch zu den Stromleitungen (18) der zweiten Polplatte (10) angeordnet sind.

## Claims

1. Fuel cell module (1) having a number of series-connected fuel cells (2) which are combined to form a fuel cell stack (4) and in which a number of shielding cables (12), which are connected to a first pole plate (8) of the fuel cell stack (4), are passed to the external area of the fuel cell stack (4) along its stacking direction as far as a contact area for a second pole plate (10) of the fuel cell stack (4).

2. Fuel cell module (1) according to Claim 1, in which the shielding cables (12) are arranged symmetrically around a central axis, which is extended in the stacking direction, of the fuel cell stack (4).

3. Fuel cell module (1) according to Claim 1, in which the shielding cables (12) are arranged at approximately uniform intervals on the circumference of the cross section, determined in the stacking direction, of the fuel cell module (1).

4. Fuel cell module (1) according to one of Claims 1 to 3, whose shielding cables (12) are joined together in the contact area (14) to form a first connecting contact (16).

5. Fuel cell module (1) according to Claim 4, from whose second pole plate (10) a number, which corresponds to the number of shielding cables (12), of connecting cables (20) originate and are joined together to form a second connecting contact (22), with each connecting cable (20) being routed in the contact area (14) in the immediate vicinity of a respective shielding cable (12).

6. Fuel cell module (1) according to one of Claims 1 to 5, in which the first pole plate (8) is connected to a power cable (18) and the second pole plate (10) is connected to a power cable system (24) which surrounds the power cable (18) in the manner of a coaxial arrangement.

7. Fuel cell module (1) according to one of Claims 1 to 5, in which the first pole plate (8) and the second pole plate (10) are connected to at least two respective power cables (18), with the power cables (18) of the first pole plate (8) being arranged symmetrically with respect to the power cables (18) of the second pole plate (10).

## Revendications

1. Module ( 1 ) de piles à combustible, comprenant un certain nombre de piles ( 2 ) à combustible montées en série et rassemblées en un empilement ( 4 ) de piles à combustible, dans lequel un certain nombre de lignes ( 12 ) de protection reliées à une première plaque ( 8 ) polaire de l'empilement ( 4 ) de piles à combustible est guidé à la partie extérieure de l'empilement ( 4 ) de piles à combustible le long de la direction d'empilement jusqu'à une partie de contact pour une deuxième plaque (10) polaire de l'empilement ( 4 ) de piles à combustible.

2. Module ( 1 ) de pile à combustible suivant la revendication 1, dans lequel les lignes ( 12 ) de protection sont disposées symétriquement autour d'un axe central s'étendant dans la direction de l'empilement ( 4 ) des piles à combustible.

3. Module ( 1 ) de pile à combustible suivant la revendication 1, dans lequel les lignes ( 12 ) de protection sont disposées en étant à peu près équidistantes sur le pourtour de sa section transversale déterminée dans la direction d'empilement.

4. Module ( 1 ) de pile à combustible suivant l'une des revendications 1 à 3, dont les lignes ( 12 ) de protection sont rassemblées dans la partie ( 14 ) de contact en un premier contact (16) de connexion.

5. Module (1) de pile à combustible suivant la revendication 4, de la deuxième plaque ( 10 ) polaire duquel partent un certain nombre de lignes ( 20 ) de connexion correspondant au nombre des lignes ( 12 ) de protection, lignes ( 20 ) qui sont rassemblées pour former un deuxième contact ( 22 ) de connexion, chaque ligne ( 20 ) de connexion étant dans la partie (14) de contact guidée à proximité immédiate de respectivement une ligne ( 12 ) de protection.

6. Module ( 1 ) de pile à combustible suivant l'une des revendications 1 à 5, dans lequel la première plaque ( 8 ) polaire est reliée à une ligne ( 18 ) de courant et la deuxième plaque (10) polaire à un système ( 24 ) de ligne de courant entourant la ligne ( 18 ) de courant à la façon d'un agencement coaxial.

7. Module ( 1 ) de pile à combustible suivant l'une des revendications 1 à 5, dans lequel la première plaque ( 8 ) polaire et la deuxième plaque ( 10 ) polaire sont reliées à au moins deux lignes ( 18 ) de courant, les lignes ( 18 ) de courant de la première plaque ( 8 ) polaire étant symétriques des lignes ( 18 ) de courant de la deuxième plaque (10) polaire.
